# EUROPÄISCHE PATENTANMELDUNG

(11) **EP 1 102 378 A2**
(43) Veröffentlichungstag der Anmeldung: **23.05.2001**
(21) Anmeldenummer: 00124587.7
(22) Anmeldetag: 10.11.2000
(51) Int. Cl.: H02H 3/05, H01H 47/00

(54) **Sicherheitsschaltung**

(30) Priorität: 19.11.1999 DE 19955632
(71) Anmelder: H.-J. Bernstein GmbH, 32479 Hille (DE)
(72) Erfinder: Kieviet, Michael, 49324 Melle (DE); Fleischmann, Jens, 33604 Bielefeld (DE)
(74) Vertreter: Specht, Peter, Dipl.-Phys.

(57) **Zusammenfassung**

Die Erfindung betrifft eine Sicherheitsschaltung zur Schaltung wenigstens einer Last mit Schaltern, welche von einer Steuereinheit, vorzugsweise gebildet aus einem oder mehreren Mikrocontrollern, ansteuerbar sind und deren Schaltzustand mit Hilfe von Detektoren durch die Steuereinheit überwachbar ist, wobei die Schaltung sich dadurch auszeichnet, daß wenigstens zwei der Schalter (z.B. V1; K1 bzw. V2; K2) in jedem Zweig der Last (KL) zu dieser in Reihe geschaltet sind, und wobei wenigstens einer der Schalter in jedem Zweig der Last (KL) separat von der Steuereinheit ansteuerbar ist, wobei wenigstens zwei Detektoren (V3, V4) zur Überwachung des Schaltzustandes der Schalter (V1, K1; V2, K2) vorgesehen sind, deren Ausgang an die Steuereinheit (µC1, µC2) angeschlossen ist, welche dazu ausgelegt ist, anhand der von den Detektoren (V3, V4) abgegebenen Informationen über den Ist-Schaltzustand der Schalter (V1, K1; V2, K2) eine Warn- oder Notmaßnahme auszulösen.

## Beschreibung

Die Erfindung betrifft eine Sicherheitsschaltung nach dem Oberbegriff des Anspruches 1.

Bei der Schaltung von Lasten mit Hilfe von Mikrocontrollern besteht der Bedarf nach einer möglichst einfachen und unkomplizierten Ausgestaltung sicherer Schaltvorgänge. Sicherheit gemäß verschiedener Normen (z.B. EN 954.1) wird u.a. erreicht durch die Erkennung und Beherrschung aller Verschaltungs-, Bauelement- und Betriebsfehler. Das Schaffen einer einfachen Lösung für elektrische Ausgangsstufen (Schalter) ist die Aufgabe der Erfindung.

Die Erfindung löst diese Aufgabe durch den Gegenstand des Anspruches 1. Danach sind jeweils wenigstens zwei Schalter in jedem Zweig der Last zu dieser in Reihe geschaltet, wobei wenigstens einer der Schalter in jedem Zweig separat von der Steuereinheit ansteuerbar ist, und wobei zwei Detektoren zur Überwachung des Schaltzustandes der Schalter vorgesehen sind, deren Ausgang an die Steuereinheit angeschlossen ist, welche dazu ausgelegt ist, anhand der von den Detektoren abgegebenen Informationen über den Ist-Schaltzustand der Schalter eine Warn- oder Notmaßnahme auszulösen.

Vorzugsweise ist in jedem Zweig der Last jeweils ein elektronischer und ein mechanischer Schalter (z.B. ein Relais) zur Last in Reihe geschaltet, die ferner separat in jedem Zweig der Last von zwei verschiedenen Mikrocontrollern angesteuert werden. Eine Programmroutine der Mikrocontroller ermöglicht den Vergleich der Meßergebnisse der jeweils nicht überwachten Detektoren mit den Meßergebnissen der überwachten Detektoren und das Auslösen eines Schaltvorganges an den Relais in Abhängigkeit von diesem Vergleich.

Die Erfindung schafft eine unkomplizierte ausgestaltete, kostengünstige Sicherheitsschaltung, deren besonderer Vorteil u.a. darin liegt, daß anhand einer einfachen Kombination aus elektronischen Schaltelementen und insbesondere einfachen kontaktbehafteten Schaltern ohne zwangsgeführte Kontakte die Zweikanaligkeit und die Redundanz zur Erfüllung entsprechender Sicherheitsanforderungen z.B. gemäß Sicherheitsstandard EN954-1 realisierbar ist.

Weitere vorteilhafte Ausführungsformen der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
- Fig. 1a,b: Prinzipschaltbilder zur Veranschaulichung der Erfindung;
- Fig. 2: einen detaillierten Schaltplan der Erfindung;
- Fig. 3: ein Prinzipschaltbild eines weiteren Ausführungsbeispiels der Erfindung.

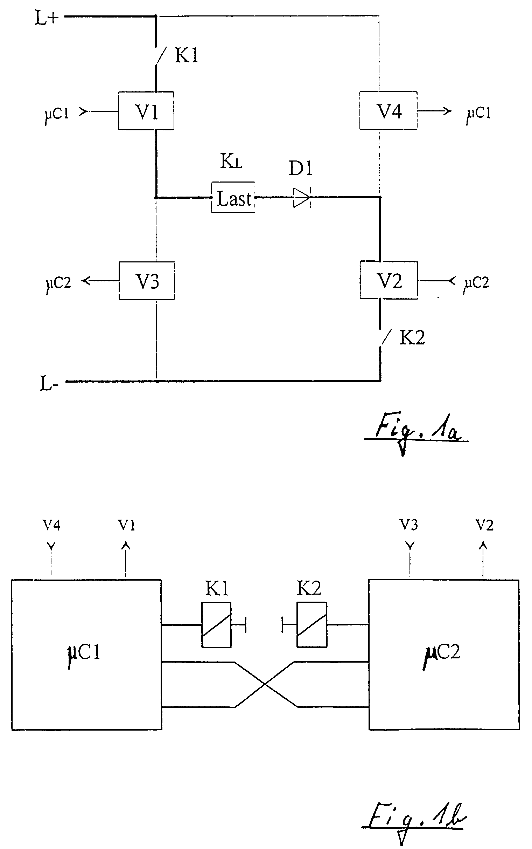

Fig. 1 zeigt eine Sicherheitsschaltung zur Schaltung einer Last KL - z.B. ein Schütz - mit Schaltern V1, V2, welche jeweils von einem Mikrocontroller µC1, µC2 an- steuer- und überwachbar sind. Hierzu sind in beiden Zweigen der Last jeweils die elektronischen Schalter V1 und V2 sowie als elektromechanische Schalter jeweils zwei Relais K1, K2 in Reihe zur Last KL geschaltet. Sowohl die Steuereingänge der elektronischen Schalter als auch die Steuereingänge der Relais sind im positiven und negativen Zweig der Last jeweils mit Steuersignalen von einem der zwei Mikrocontroller µC1, µC2 beaufschlagbar. Mit Hilfe von zwei Detektoren V3, V4 ist es möglich, den Zustand der Schalter V1,V2, K1 und K2 sowie die Funktion der Schutzdiode Dl zu überwachen. Zwischen die Last KL und den Schalter V2 ist die Diode D1 geschaltet, die dafür sorgt, daß im abgeschalteten Zustand der Strom nicht über V3-K1-V4 fließen kann und damit das selektive Detektieren ermöglicht.

Die Funktionsweise dieser Schaltanordnung ist wie folgt:

Die beiden schaltenden, von den Mikrocontrollern uC1 und uC2 ansteuerbaren Elemente bzw. Schalter V1 und V2 ermöglichen eine Trennung der Last KL von den Potentialen L+ und L-. Die Reihenschaltung der Fig. 1 realisiert eine UND-Funktion der Schalter V1, V2. Dies bedeutet, daß erst dann, wenn beide Mikrocontroller µC1, µC2 ein entsprechendes Signal an die Schalter V1, V2 abgeben, die Last KL von Strom durchflossen wird.

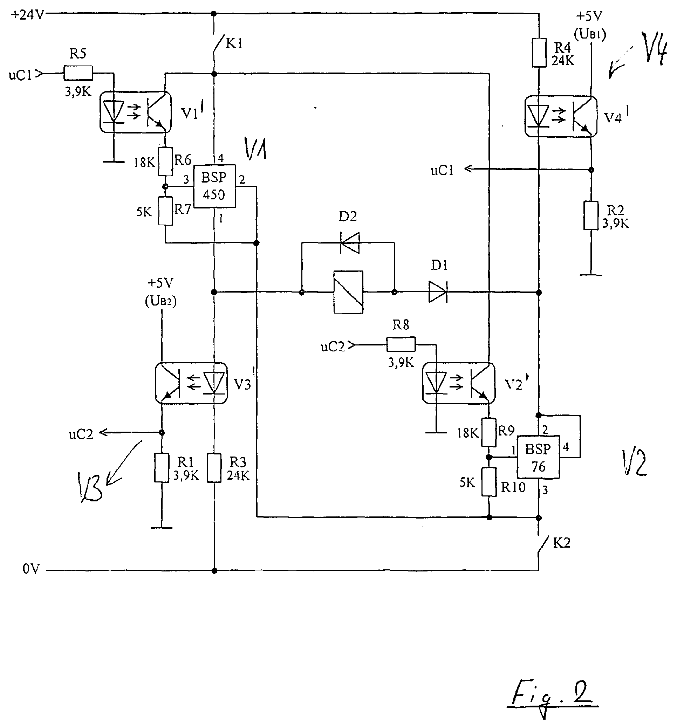

Das mit dem Schalter V1 in Reihe geschaltete Relais K1 (bzw. das mit dem Schalter V2 in Reihe geschaltete Relais K2) ermöglicht zusätzlich eine potentialfreie Trennung der Last KL von L+ und L-. Eine Aktivierung der Relais Kl, K2 erfolgt jedoch nur im Fehlerfall und zusätzlich in UND-Funktion. Ein Fehlerfall liegt z.B. dann vor, wenn die beiden Mikrocontroller µC1, µC2 bei einer Auswertung der Signale von den Detektoren V3, V4 zu unterschiedlichen Ergebnissen gelangen oder V1 bzw. V2 anders schalten als sie angesteuert werden. Den Schaltzustand der Schalter V1 und V2 und die Funktionsfähigkeit der Diode D1 werten die beiden Detektoren V3 und V4 aus. Die Ergebnisse dieser Abfrage werden jeweils auch von dem jeweils anderen Mikrocontroller ausgewertet (siehe Fig. 2). Zum Vergleich der Ergebnisse sind die Mikrocontroller µC1, µC2 auch direkt miteinander verbunden. Die Mikrocontroller sind dann dazu in der Lage, die Fehlfunktion z.B. eines Bauelementes auszuwerten und entsprechende Vorsichtsmaßnahmen zu treffen, wie das Abschalten der Relais K1 und K2.

Die Signale von und zu den Mikrocontrollern µC1, µC2 werden jeweils galvanisch über Optokoppler V1', V2', V3, V4von der übrigen Sicherheitsschaltung getrennt. Den Optokopplern V1', V2' nachgeschaltete Spannungsteiler R6/R7 und R9/R10 stellen bei Anliegen des Potentials, also im Zustand "High", etwa eine Spannung von 5V an den Steuereingängen der Schalter V1, V2 bereit. Die Diode D1 verhindert einen Stromfluß über V4 durch die Last KL und über V3 nach 0V. Werden die Schalter V1 und V2 nicht angesteuert und die Mikrocontroller detektieren dennoch durch V3 und V4 einen Stromfluß, so ist Dl oder V1 und V2 defekt. In diesem Fall wird durch die Controller das Relais Kl geöffnet und die Last ist sicher vom Versorgungskreis getrennt. Die Detektoren bestehen jeweils aus den Optokopplern V3, V4 sowie den mit diesen in Reihe geschalteten Widerständen R3, R4 (Eingangsseite). An der Ausgangsseite der Optokoppler sind diese über Widerstände R1 und R2 mit Masse sowie mit dem Betriebspotential des entsprechenden Controllers verbunden. Der Signalabgriff zu den Mikrocontroller erfolgt zwischen dem Widerstand R1 und dem Optokoppler V3 sowie zwischen R2 und V4.

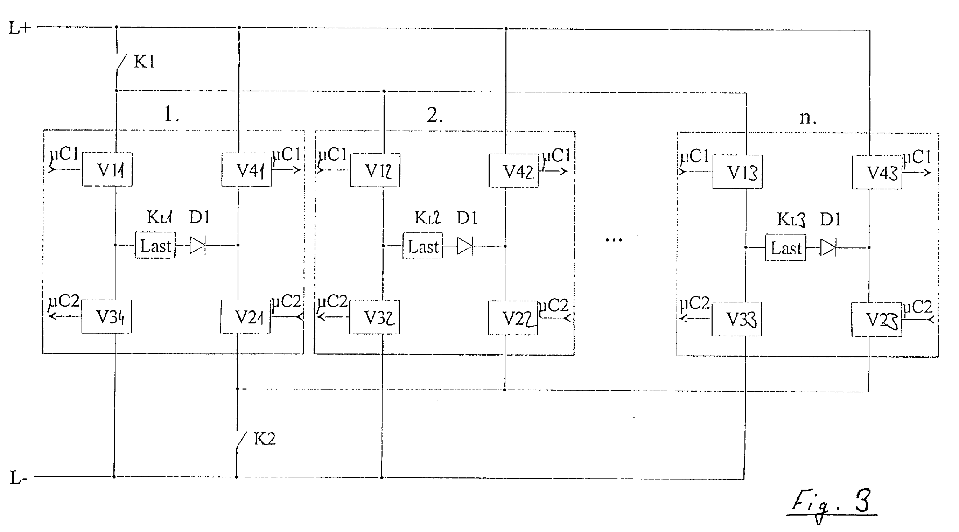

Nach Fig. 3 sind an die Relais Kl, K2 im positiven und negativen Zweig der Schaltung jeweils mehrere zueinander parallel geschaltete Schaltungsabschnitte angeschlossen, die jeweils aus einer Reihenschaltung aus jeweils einem ersten elektronischen Schalter V11, V12, ... V1n, einer Last KL1, KL2, .... KLn, einem zweiten elektronischen Schalter V21, V22, V2n, und den jeweiligen Detektoren V31, V32, ...V3n; V41, V42, ... V4n bestehen. Auf diese Weise ist es möglich, mit nur jeweils einem Relais Kl im positiven und einem Relais K2 im negativen Teil der Schaltung quasi ,,mehrere" Sicherheitsschaltungen für Lasten zu verwirklichen. Im Fehlerfall werden die Relais K1 und K2 geöffnet, so daß die gesamten Lasten KL1, KL2, .... KLn, vom Betriebspotential getrennt werden.,

## Patentansprüche

1. Sicherheitsschaltung zur Schaltung wenigstens einer Last mit Schaltern, welche von einer Steuereinheit, vorzugsweise gebildet aus einem oder mehreren Mikrocontrollem, ansteuerbar sind und deren Schaltzustand mit Hilfe von Detektoren durch die Steuereinheit überwachbar ist, **dadurch gekennzeichnet, daß**
- wenigstens zwei der Schalter (z.B. V1 ; K1 bzw. V2; K2) in jedem Zweig der Last (KL) zu dieser in Reihe geschaltet sind,
- wobei wenigstens einer der Schalter in jedem Zweig der Last (KL) separat von der Steuereinheit ansteuerbar ist,
- wobei wenigstens zwei Detektoren (V3, V4) zur Überwachung des Schaltzustandes der Schalter (V1, K1; V2, K2) vorgesehen sind, deren Ausgang an die Steuereinheit (µC1, µC2) angeschlossen ist, welche dazu ausgelegt ist, anhand der von den Detektoren (V3, V4) abgegebenen Informationen über den Ist-Schaltzustand der Schalter (V1, K1; V2, K2) eine Warn- oder Notmaßnahme auszulösen.

2. Sicherheitsschaltung nach Anspruch 1, dadurch gekennzeichnet, daß in jedem Zweig (L-, L+) der Last (KL) jeweils ein elektronischer V1, V2) und ein elektromechanischer Schalter (K1, K2) zur Last (KL) in Reihe geschaltet sind.

3. Sicherheitsschaltung nach Anspruch 1 oder 2, dadurch gekennzeichnet, daß in jedem Zweig (L-, L+) der Last (KL) jeweils ein separater Mikrocontroller (µC1, µC2) zur Ansteuerung der Schalter (V1, K2; V2, K2) und zur Auswertung der Ausgaben der Detektoren (V3, V4) vorgesehen ist, wobei die beiden Mikrocontroller (µC1, µC2) über wenigstens eine Datenleitung miteinander verbunden sind.

4. Sicherheitsschaltung nach einem der vorstehenden Ansprüche, dadurch gekennzeichnet, daß zwischen die Last (KL) und wenigstens einen der elektronischen Schalter (V1,V2) ein Rückstrom-Trennelement geschaltet ist.

5. Sicherheitsschaltung nach einem der vorstehenden Ansprüche, gekennzeichnet durch eine Programmroutine der Mikrocontroller (µC1, µC2), die zum Vergleich der Meßergebnisse der Detektoren (V3, V4) und zum Auslösen der Schaltvorgänge an den Schaltern V1,V2K1, K2 in Abhängigkeit von diesem Vergleich ausgelegt ist.

6. Sicherheitsschaltung nach einem der vorstehenden Ansprüche, dadurch gekennzeichnet, daß die elektromechanischen Schalter (K1, K2) Relais sind, deren Steuereingänge an die den elektronischen/elektromechanischen Schalter (V1, K1; V2, K2) im jeweiligen Zweig der Last ansteuernden Mikrocontroller (µC1, µC2) angeschlossen sind.

7. Sicherheitsschaltung nach einem der vorstehenden Ansprüche, dadurch gekennzeichnet, daß die Signale von und zu den Mikrocontrollern (µC1, µC2) über Optokoppler (V1', V2', V3, V4) in die übrigen Schaltungsabschnitte ein/auskoppelbar sind.

8. Sicherheitsschaltung nach einem der vorstehenden Ansprüche oder nach dem Oberbegriff des Anspruches 1 , dadurch gekennzeichnet, daß an jeweils ein Relais (K1, K2) in jedem Zweig der Last (KL) jeweils mehrere zueinander parallel geschaltete Schaltungsabschnitte angeschlossen sind, die jeweils wenigstens aus einer Reihenschaltung aus einem ersten elektronischen Schalter (V11, V12, ...), einer Last (KL1, KL2, ...), einem zweiten elektronischen Schalter (V21, V22, ...) und jeweils zwei Detektoren (V31, V32, ...; V41, V42, ...) zur Überwachung der jeweils ersten und zweiten elektronischen Schalter (V11, V12, ...; V21, V22, ...) bestehen.
